# EUROPEAN PATENT APPLICATION

(11) **EP 1 801 013 A2**
(43) Date of publication of application: **27.06.2007**
(21) Application number: 06026041.1
(22) Date of filing: 15.12.2006
(51) Int. Cl.: B65B 25/00, B65B 31/04, B65B 9/06, B65B 55/16

(54) **Fresh food packaging**

(30) Priority: 23.12.2005 GB 0526301
(71) Applicant: Barfoots of Botley Limited, Pagham Bognor Regis West Sussex PO21 3PX (GB)
(72) Inventor: Creasy, Justin Neil, Rustington West Sussex BN16 3EB (GB)
(74) Representative: Brooks, Nigel Samuel

(57) **Abstract**

In vertical packaging apparatus, flow wrap web 105 is wrapped around a food introduction zone 104, longitudinally sealed at 106, transversely sealed at 108 and cut into individual packs at 110. An ozone introduction lance 121 and an ozone monitoring device 124 extend into the wrapping at the zone 104, as does a funnel 151 for introducing individual weighed portions of food such as chopped salad 102. The food introduction is intermittent via the funnel. It is introduced when the flow wrap has been formed into a sufficient length of container to hold the portion of salad. To avoid the ozone being introduced directly against part of the salad and oxidising it, the ozone is also introduced intermittently into the formed container prior to introduction of the salad. The latter falls into the ozone dosed atmosphere and in doing so disperses any local concentration of ozone that may not have been dispersed by diffusion.

## Description

The present invention relates to packaging of fresh food.

A crucial factor in fresh food packaging is the shelf life achieved, that is to say the time period for which the packaged food can be displayed before the food is liable to deteriorate and is no longer within its "Sell By" date.

Fresh food is liable to deteriorate due to the activity of bacteria, which feed on the food. Therefore a primary function of the packaging is to exclude bacteria from reaching the food. This function is ineffective, however, if the bacteria are enclosed with the food in the first place.

In our British patent No 2,365,749, we described and claimed a method of packaging fresh food, including the steps of:
1. irradiating the food with ultra-violet light for destruction of bacteria thereon;
2. packaging the UV-irradiated food in a "high-care" room, including enclosing the food in packaging material which is impervious to bacteria;
   wherein:
   - the atmosphere of the high-care room is chilled;
   - the atmosphere of the high-care room is pressurised above the pressure of surrounding rooms; and
   - the chilled air fed to the high-care room is filtered for bacteria removal.

The object of the present invention is to provide a method of fresh food packaging in which enclosed bacteria are minimised.

According to the invention there is provided a method of packaging fresh food, including the steps of:
- providing a package;
- introducing fresh food into the package;
- introducing ozone into the package; and
- sealing the package.

Preferably this method is included within the packaging step (2) of the method of our British patent No. 2,365,749.

Ozone is a biocide, which is poisonous to humans at high concentrations. However, it is unstable, decaying to negligible concentrations within 45minutes. This period is long enough for microbes included within the package on the food to be oxidised and rendered harmless. Too great a concentration of the ozone can discolour the food by oxidisation of it. We have determined that an initial concentration of ozone in the package of between 80 and 1,000 parts per million and preferably between 200ppm and 700ppm is effective.

Normally the package will include a micro-porous membrane, enabling the atmosphere within the package to stabilise after decay of the ozone at concentrations of approximately:
5% oxygen and
15% carbon dioxide.

It is envisaged that the method of the invention can be applied to horizontal packaging where the food is introduced into its packages horizontally generally on trays, although the package may be formed with the tray and food inverted. It can also be applied to vertical packaging.

Conveniently, the packages are formed by wrapping and longitudinally sealing a packaging web around the food as it is introduced into the tube so formed, and sealing the tube intermittently across its length between individual food portions and trays where provided.

The ozone can be introduced from a lance close to the position of the cross sealing station, with ozone gas being steadily dispensed from the lance. Conveniently a probe is provided set back from the orifice of the lance for sampling the ozone concentration.

In accordance with a particular feature of the invention, the sampled concentration is printed onto the package, either directly or via a label applied to the package.

To help understanding of the invention, a specific embodiment thereof will now be described by way of example and with reference to the accompanying drawings, in which:
Figures 1A and 1B together are a diagrammatic side view of a horizontal packing line for packaging in accordance with the invention;
Figure 2 is a similar view of a vertical packing line of the invention; and
Chart 1 is graph of log microbe count against time for comparative packs.

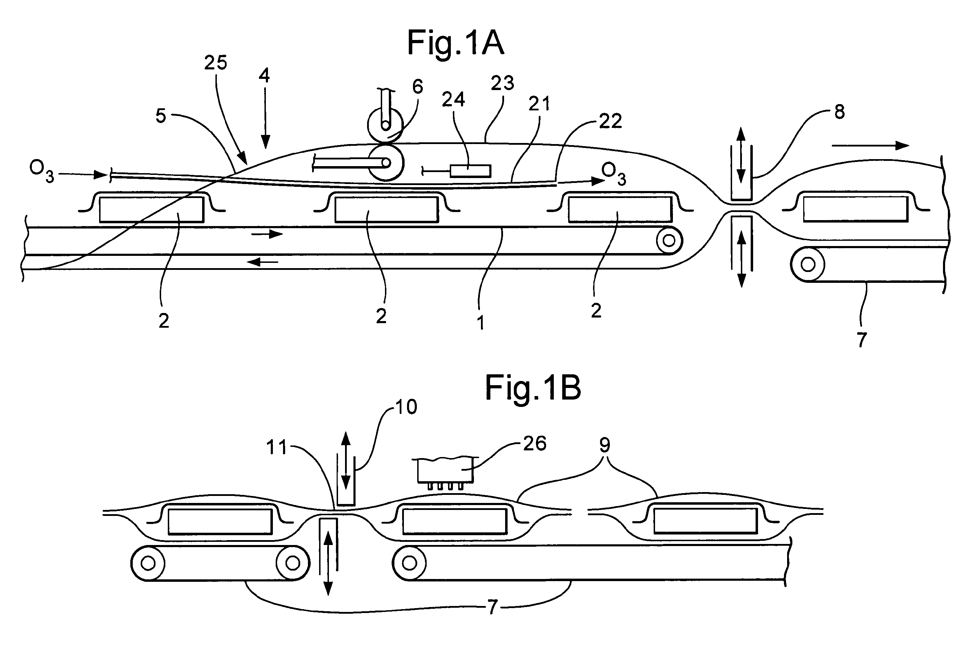

Referring to Figures 1A and 1B of the drawings, a conveyor 1 of sweet corn cobs 2, which have been washed and have had trays 3 placed over them to allow washing water to drain from them, extends into a wrapping zone 4. Here a web 5 of modified atmosphere film is draped around the conveyor in a known manner and sealed longitudinally at 6. Beyond the end of the internal conveyor 1 and just short of an external conveyor 7, a transverse sealing unit 8 is provided. This seals the individual packs 9. Further downstream, the packs are cut from each other at 10, through the middle of the transverse seal 11, whereby they remain closed. The conveyors move continuously. The individual packs can be turned up to be tray down when they are packed in bulk for distribution. The features of this paragraph are known.

Downstream of the longitudinal sealer 6, an ozone lance 21 continuously dispenses ozone from its distal end orifice 22 into the sleeve 23 formed from the web around the sweet corn cobs. The dispensing is above the trays, to avoid accidental neat ozone application to the cobs themselves, which could cause local oxidisation of them. Back along the lance, an ozone concentration detection device 24 is mounted, for monitoring the ozone concentration within the sleeve. Allowing for diffusion and dispersion of the ozone upstream of the mouth 25 of the sleeve, the concentration in the packages formed downstream can be said to be at least that at the device 24. This figure can be printed on the package, together with other information at a print head 26.

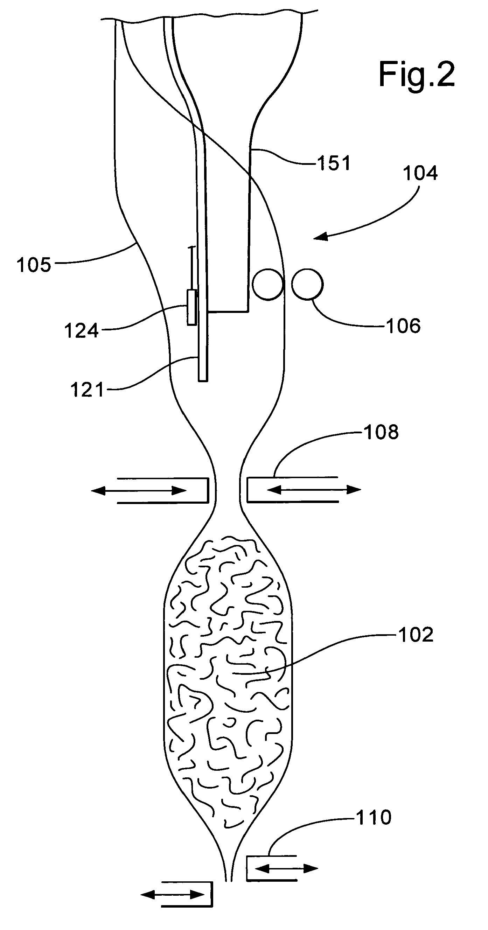

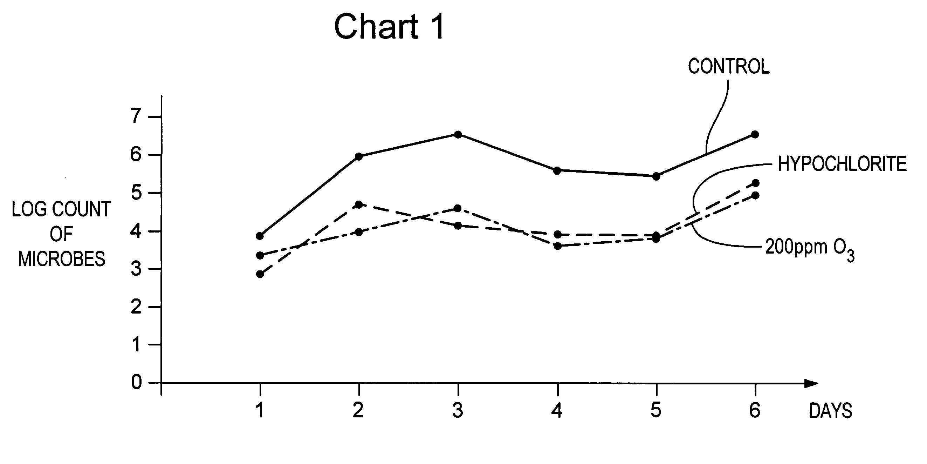

Turning to Figure 2, vertical packaging apparatus of the invention is thereshown, in distinction from the horizontal apparatus of Figures 1A and 1B. Again flow wrap web 105 is wrapped around a food product introduction zone 104, longitudinally sealed at 106, transversely sealed at 108 and cut into individual packs at 110. An ozone introduction lance 121 and an ozone monitoring device 124 extend into the wrapping at the zone 104, as does a funnel 151 for introducing individual weighed portions of food product such as chopped salad 102. Again in contradistinction from the apparatus of Figures 1 A and 1B, which operates continuously, the salad introduction is intermittent via the funnel. It is introduced when the flow wrap has been formed into a sufficient length of container to hold the portion of salad. To avoid the ozone being introduced directly against part of the salad and oxidising it, the ozone is also introduced intermittently into the formed container prior to introduction of the salad. The latter falls into the ozone dosed atmosphere and in doing so disperses any local concentration of ozone that may not have been dispersed by diffusion.

As shown in Chart 1, the count of microbes on corn cobs in packs treated with ozone is comparable to that for cobs washed with hypochlorite solution. It will be appreciated that since the microbe count is on a log scale, there is a two orders of magnitude difference in the count between the control and the two - ozone and hypochlorite - treated samples.

## Claims

1. A method of packaging fresh food, including the steps of:
• providing a package;
• introducing fresh food into the package;
• introducing ozone into the package; and
• sealing the package.

2. A method of packaging fresh food as claimed in claim 1, wherein the steps of introducing fresh food into the package and sealing the package are carried out in a "high care" room and includes:
• enclosing the food in packaging material which is impervious to bacteria; wherein:
• the atmosphere of the high-care room is chilled,
• the atmosphere of the high-care room is pressurised above the pressure of surrounding rooms, and
• the chilled air fed to the high-care room is filtered for bacteria removal; and
the step of introducing ozone into the package is also carried out in the "high-care" room.

3. A method of packaging fresh food as claimed in claim 2, including:
• prior to the packaging step, irradiating the food with ultra-violet light for destruction of bacteria thereon.

4. A method of packaging fresh food as claimed in claim 1, claim 2 or claim 3, wherein the quantity of ozone introduced into the package is such that an initial concentration of ozone in the package is between 80 and 1,000 parts per million.

5. A method of packaging fresh food as claimed in claim 4, wherein the quantity of ozone introduced into the package is such that the initial concentration of ozone in the package is between 200 and 700 parts per million.

6. A method of packaging fresh food as claimed in any preceding claim, wherein a micro-porous membrane is included in the package, enabling the atmosphere within the package to stabilise after decay of the ozone at concentrations of approximately:
5% oxygen and
15% carbon dioxide.

7. A method of packaging fresh food as claimed in any preceding claim, wherein the package is formed by:
• wrapping and longitudinally sealing a packaging web around the food as it is introduced into the tube so formed, and
• sealing the tube intermittently across its length between individual portions of the food at a cross sealing station.

8. A method of packaging fresh food as claimed in claim 9, wherein the ozone is introduced from a lance close to the position of the cross sealing station.

9. A method of packaging fresh food as claimed in any preceding claim, wherein the ozone concentration is in the package is sampled prior to sealing of the package.

10. A method of packaging fresh food as claimed in claim 11, including the step of printing the sampled concentration onto the package, either directly or via a label applied to the package.

11. A method of packaging fresh food as claimed in claim 10 or any of claims 11 to 13, wherein the ozone concentration is sampled with a probe is provided set back from the orifice of the lance.

12. A method of packaging fresh food as claimed in any preceding claim, wherein the food is introduced into the package horizontally on or under a tray, whereby food is protected by the packaging tray from direct contact with ozone being introduced.

13. A method of packaging fresh food as claimed in claim 10, wherein the ozone is introduced into the package at a region opposite from the food with respect to the tray, whereby food is protected by the packaging tray from direct contact with ozone being introduced.

14. A method of packaging fresh food as claimed in any one of claims 1 to 6, wherein the food is introduced into the package vertically:
• the food being introduced intermittently and vertically downwards and
• the ozone being introduced between food introductions,
whereby direct of the food ozone being introduced is avoided.
